# EUROPÄISCHE PATENTSCHRIFT

(11) **EP 0 978 243 B1**
(45) Veröffentlichungstag und Bekanntmachung des Hinweises auf die Patenterteilung: **02.05.2003**
(21) Anmeldenummer: 99111630.2
(22) Anmeldetag: 16.06.1999
(51) Int. Cl.: A47D 5/00, B60N 2/28, B60N 2/60

(54) **In einem Kraftfahrzeug verwendbare Wickelunterlage**
Baby changing mat for use in a motor vehicle
Dispositif à langer des bébés dans une voiture automobile

(30) Priorität: 04.08.1998 DE 19835148
(43) Veröffentlichungstag der Anmeldung: 09.02.2000
(73) Patentinhaber: DaimlerChrysler AG, 70567 Stuttgart (DE)
(72) Erfinder: Weber, Norbert, 71149 Bondorf (DE)

(56) Entgegenhaltungen:
- DE-A- 4 401 558
- DE-A- 19 640 950
- DE-U- 9 114 419
- GB-A- 2 220 407
- US-A- 324 839

## Beschreibung

Die Erfindung betrifft eine Wickelunterlage, die für den Gebrauch in einem wenigstens zwei Sitzreihen aufweisenden Personenkraftfahrzeug geeignet ist.

Beim Verreisen mit Kleinkindern im Kraftfahrzeug ergibt sich gelegentlich die Situation, daß das Kleinkind gewickelt werden muß und daß außer im Fahrzeug kein geeigneter Raum dazu vorhanden ist. Am einfachsten kann das Wickeln dann auf einem der Rücksitze des Fahrzeuges durchgeführt werden, wobei das Baby auf der Sitzfläche des jeweiligen Rücksitzes abgelegt wird. Zweckmäßigerweise wird dem Baby dabei ein Handtuch od.dgl. untergelegt, um die Sitzfläche vor einer Verschmutzung zu schützen.

Darüber hinaus gibt es die Möglichkeit, eine Wickelunterlage, die an sich für den Gebrauch in einer Wohnung auf einer Wikkelkommode vorgesehen ist, im Fahrzeug mitzuführen, die dann zum Schutz des Fahrzeugsitzes auf diesen aufgelegt wird. Eine solche Wickelunterlage ist jedoch relativ sperrig und außerdem nicht auf die Abmessungen eines Fahrzeugrücksitzes abgestimmt, so daß eine derartige, nicht entsprechend ihrer ursprünglichen Bestimmung verwendete Wickelunterlage für das Baby insbesondere keine sichere seitliche Abstützung gewährleisten kann.

Aus der DE 44 01 558 A1 ist ein Transportbehälter für ein Kraftfahrzeug bekannt, der in einer Transportlage von einem Abdeckelement verschlossen ist. Zum Öffnen des Transportbehälters kann das Abdeckelement über ein Schwenkscharnier in eine Gebrauchslage aufgeklappt werden. In dieser Gebrauchslage kann die dann im wesentlichen horizontal angeordnete Innenseite des Abdeckelementes insbesondere als Wickelunterlage verwendet werden.

Die DE 196 40 950 A1 zeigt eine Decke für den Rücksitzbereich von Kraftfahrzeugen zum Befördern von Hunden. Im Bereich des Umfangs der Decke sind Befestigungseinrichtungen angeordnet, die ein lösbares hängendes Befestigen der Decke an autofesten Teilen ermöglichen. Zu diesem Zweck sind Verbindungsmittel, zum Beispiel Riemen, vorgesehen, mit denen die Verbindung zwischen der Decke und dem jeweiligen autofesten Teil hergestellt werden kann. Die genannten Befestigungseinrichtungen weisen mindestens zum Teil ein an der Decke befestigtes Schwenklagerteil und ein an diesem im wesentlichen in der Deckenebene oder einer zu dieser parallelen Ebene schwenkbar gelagertes Halteteil zum Rahmen des Riemens auf.

Aus dem DE-GM 72 22 332 ist eine Vorrichtung zum Überbrücken des Fußraumes zwischen den Vorder- und Rücksitzen bei einem Personenkraftwagen bekannt, die als Kinderliege dient, wobei eine mattenförmige unstarre Unterlage längs einander gegenüberliegender Ränder mit Befestigungsmitteln versehen ist, mit deren Hilfe die Unterlage einerseits an den hinteren Sitzen des Personenkraftwagens und andererseits an den Rückenlehnen der Vordersitze des Personenkraftwagens anbringbar ist.

Die vorliegende Erfindung beschäftigt sich mit dem Problem eine verbesserte Wickelunterlage anzugeben, die in einem Personenkraftfahrzeug mit wenigstens zwei Sitzreihen verwendet werden kann.

Dieses Problem wird erfindungsgemäß durch eine Wickelunterlage mit den Merkmalen des Anspruches 1 gelöst.

Die Erfindung beruht auf dem allgemeinen Gedanken, eine Wikkelunterlage auf die in einem Personenkraftfahrzeug herrschenden räumlichen Verhältnisse anzupassen und dabei eine geeignete Fixierung vorzusehen, die einen sicheren Halt der Wickelunterlage bezüglich der Sitzfläche des hinteren Fahrzeugsitzes gewährleistet. Aufgrund der vorgeschlagenen Maßnahmen ist die erfindungsgemäße Wickelunterlage vor einem Verrutschen gesichert, wodurch sich die Sicherheit für das Baby erhöht. Durch die Ausgestaltung der Wickelunterlage als aufrollbare Matte kann diese platzsparend im Fahrzeug verstaut werden.

Entsprechend einer vorteilhaften Ausführungsform der erfindungsgemäßen Wickelunterlage können die Abmessungen der Matte derart gewählt sein, daß die für die Gebrauchslage der Wickelunterlage an den Kopfstützen nach Art einer Hängematte eingehängte bzw. fixierte Matte sich beiderseits der Babyunterlage nach oben erstreckt. Dadurch kann ein auf der Babyunterlage abgelegtes Baby seitlich gesichert werden.

Außerdem ermöglicht die Ausbildung einer separaten Babyunterlage auf der Innenseite der Wickelunterlage die Auswahl unterschiedlicher, jedoch für den jeweiligen Zweck besonders geeigneter Werkstoffe bzw. Materialien für die Matte und für die Babyunterlage. Beispielsweise kann die Babyunterlage aus einem saugfähigen Material bestehen und als Kissen ausgebildet sein, während die Matte flüssigkeitsundurchlässig, insbesondere aus einem Kunststoffmaterial hergestellt ist. Auf diese Weise wirkt die Babyunterlage besonders hautfreundlich, während die Matte den Rücksitz wirksam vor Verschmutzungen schützt.

Bei einer bevorzugten Ausführungsform der erfindungsgemäßen Wickelunterlage kann die Babyunterlage lösbar an der Matte befestigt sein, insbesondere durch einen Reißverschluß oder durch einen Klettverschluß. Diese Maßnahme ermöglicht es, die Babyunterlage beispielsweise in einer Waschmaschine gründlich zu reinigen, wodurch für die erfindungsgemäße Wickelunterlage eine ausreichende Hygiene gewährleistet werden kann.

Bei einer anderen Ausführungsform der erfindungsgemäßen Wikkelunterlage können auf der Matteninnenseite zwischen den mit den Bändern und/oder Schlaufen versehenen Enden und der Babyunterlage mehrere Taschen zum Verstauen unterschiedlicher Utensilien, wie Reinigungstücher, Babycreme, Babypuder, Spielzeug, Ersatzkleidung, angebracht sein. Durch diese Merkmale wird die Wickelunterlage zu einer kompletten Wickelausrüstung erweitert, die besonders raumsparend im Fahrzeug ständig mitgeführt werden kann.

Bei einer Weiterbildung der erfindungsgemäßen Wickelunterlage können auf der Matteninnenseite unter der Babyunterlage Zusatztaschen angeordnet sein, die insbesondere an die Abmessungen frischer Windeln angepaßt sind. Diese Maßnahmen ermöglichen einerseits die Bereitstellung zusätzlichen Stauraumes, der andererseits - zumindest wenn frische Windeln in den Zusatztaschen untergebracht sind - die Bequemlichkeit der Babyunterlage erhöht.

Weitere wichtige Merkmale und Vorteile der erfindungsgemäßen Wickelunterlage ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert. Es zeigen, jeweils schematisch,
- Fig. 1: eine Draufsicht auf eine im wesentlichen eben ausgerollte Wickelunterlage nach der Erfindung,
- Fig. 2: eine Draufsicht wie in Fig. 1, jedoch mit weggeklappter Babyunterlage,
- Fig. 3: eine dreidimensionale Ansicht auf die erfindungsgemäße Wickelunterlage in deren Gebrauchslage beim Wickeln eines Babys und
- Fig. 4: eine dreidimensionale Ansicht auf die erfindungsgemäße Wickelunterlage in ihrem zusammengerollten Transportzustand.

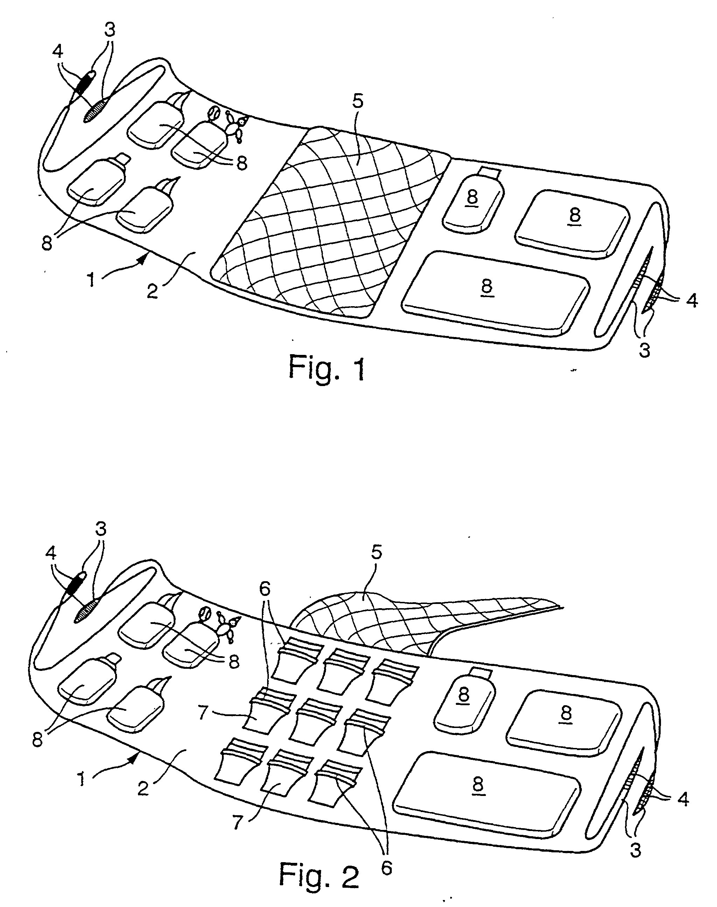

Entsprechend den Fig. 1 bis 3 weist eine erfindungsgemäße Wickelunterlage 1 eine Matte 2 auf, die aus einem elastischen Material besteht. Das Material der Matte 2 ist dabei so gewählt, daß die Matte 2 und somit die komplette Wickelunterlage 1 zusammengerollt werden kann. In den Fig. 1 bis 3 ist die erfindungsgemäße Wickelunterlage 1 jedoch in ihrem entrollten oder abgerollten Gebrauchszustand dargestellt.

Die Matte 2 weist an zwei gegenüberliegenden Enden bzw. Seiten Bänder 3 auf, die an ihren Enden im Ausführungsbeispiel mit einem Klettverschluß 4 ausgestattet sind. Mit Hilfe der Klettverschlüsse 4 können jeweils zwei Bänder 3 eines Mattenendes zu einer geschlossenen Schlaufe verbunden werden. Bei einer anderen Ausführungsform der erfindungsgemäßen Wickelunterlage 1 können diese Schlaufen vollständig bzw. einteilig an der Matte 2 ausgebildet sein.

Zwischen den mit den Bändern 3 ausgestatteten Enden der Matte 2 ist auf der Innenseite der Matte 2 etwa mittig eine Babyunterlage 5 angeordnet, die im dargestellten Ausführungsbeispiel entlang einer ihrer Seitenkanten, entsprechend den Fig. 1 und 2 an der oberen Seitenkante, mit der Matte 2 derart verbunden ist, daß die Babyunterlage 5 von der Matte 2 weggeklappt werden kann. Während Fig. 1 die normale Gebrauchslage für die Babyunterlage 5 wiedergibt, zeigt Fig. 2 die Wickelunterlage 1 mit nach oben von der Matte 2 weggeklappter Babyunterlage 5.

Die Babyunterlage 5 ist vorzugsweise aus einem kissenartigen, wattierten, saugfähigen, hautfreundlichen Material, das eine bequeme Auflage für ein zu wickelndes Baby gewährleistet. Außerdem kann vorgesehen sein, daß die Babyunterlage 5 lösbar, z.B. mittels eines Reißverschlusses oder eines Klettbandes, mit der Matte 2 verbunden ist, so daß die Babyunterlage 5 getrennt von der Matte 2 gewaschen werden kann. Vorzugsweise ist dazu die Babyunterlage 5 waschmaschinenfest ausgebildet.

In Fig. 2 ist deutlich zu erkennen, daß auf der Innenseite der Matte 2 in dem Bereich, auf dem die Babyunterlage 5 auf der Matte 2 aufliegt, zusätzliche Taschen oder Haltebänder 6 vorgesehen sind, mit denen im Ausführungsbeispiel frische Windeln 7 an der Wickelunterlage 1 befestigt sind. Durch die Anordnung der weichen Windeln 7 unter der Babyunterlage 5, wird die Auflage für das Baby besonders weich.

Auf der Innenseite der Matte 2 sind zwischen den mit den Bändern 3 ausgestatteten Enden und dem mittleren, mit der Babyunterlage 5 ausgestatteten Bereich weitere Taschen 8 angeordnet, die zur Aufnahme unterschiedlicher Gegenstände dienen. Beispielsweise können in den Taschen 8 Körperpflegemittel wie Puder, Creme, Feuchtigkeitstücher, Öltücher, sowie Ersatzkleidung, Spielsachen, verstaut werden. Außerdem kann eine der Taschen speziell zur Aufnahme verschmutzter Windeln ausgebildet sein.

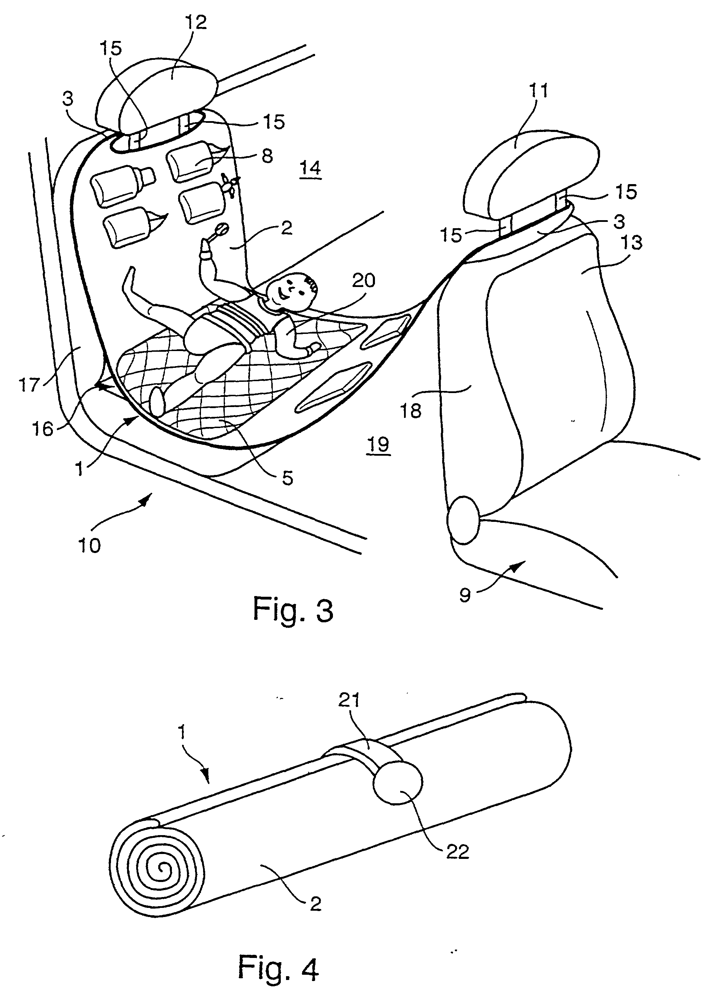

Fig. 3 zeigt die erfindungsgemäße Wickelunterlage während ihres Gebrauches in einem im übrigen nicht dargestellten Personenkraftfahrzeug, das wenigstens zwei Sitzreihen 9 und 10 aufweist. Zum Gebrauch der Wickelunterlage 1 wird diese zunächst entrollt und mit Hilfe der Bänder 3 an Kopfstützen 11 und 12 hintereinander angeordneter Sitze 13 und 14 der beiden Sitzreihen 9 und 10 befestigt, wobei die durch die Bänder 3 gebildeten Schlaufen die Kopfstützen 11 und 12 bzw. deren Verstellstangen 15 umfassen. In Fig. 3 ist gut zu sehen, daß die Abmessungen der Matte 2 sowie der Bänder 3 derart auf das Fahrzeug abgestimmt sind, daß die Wickelunterlage 1 in ihrem Gebrauchszustand so zwischen dem vorderen Sitz 13 und dem hinteren Sitz 14 positioniert ist, daß der die Babyunterlage 5 aufweisende Abschnitt der Matte 2 auf einer Sitzfläche 16 des hinteren Sitzes 14 aufliegt.

Außerdem ist die Matte 2 derart bemessen, daß sie sich einenends auf der Vorderseite einer Rücklehne 17 des hinteren Sitzes 14 und anderenends in Richtung auf die Rückseite einer Rückenlehne 18 des vorderen Sitzes 13 bzw. auf die Kopfstütze 11 des vorderen Sitzes 13 hin erstreckt. Durch diese Ausgestaltung wird zum einen ein wirksamer Schutz des Rücksitzes 14 vor Verschmutzungen gewährleistet, zum anderen wird ein zwischen den Sitzen 13 und 14 ausgebildeter Fußraum 19 durch den dem vorderen Sitz 13 zugewandten Teil der Matte 2 abgedeckt, so daß insbesondere ein auf der Babyunterlage 5 aufgelegtes Baby 20 auch unbeaufsichtigt nicht ohne weiteres in den Fußraum 1 fallen kann. Aus Fig. 3 wird besonders deutlich, daß durch die geschickte Anordnung der Taschen 8 in den seitlich an die Babyunterlage 5 angrenzenden Bereichen der Matte 2 dem Verwender der Wickelunterlage 1 einen erleichterten Zugriff auf die notwendigen Utensilien zur Pflege des Babys 20 ermöglicht ist. Sämtliche notwendige Pflegeutensilien sind in Griffweite, so daß das Wechseln der Windeln ohne größere Probleme durchgeführt werden kann.

Fig. 4 zeigt die Wickelunterlage 1 in ihrem aufgerollten Zustand. Dabei können auf der Außenseite der Matte 2 Verschlußmittel, beispielsweise ein Band 21 mit einer Schnalle 22, vorgesehen sein, mit denen die Rollenform der aufgerollten Wickelunterlage 1 gesichert werden kann. In ihrem Transportzustand entsprechend Fig. 4 kann die erfindungsgemäße Wickelunterlage 1 besonders raumsparend in einem Fahrzeug untergebracht werden.

## Patentansprüche

1. Wickelunterlage geeignet für den Gebrauch in einem wenigstens zwei Sitzreihen aufweisenden Personenkraftfahrzeug, mit einer aufrollbaren Matte (2) aus einem elastischen Material, die an zwei gegenüberliegenden Enden Bänder (3) und/oder Schlaufen aufweist, mit denen die Matte (2) an zwei Kopfstützen (11,,12) von zwei in Fahrtrichtung hintereinander angeordneten Fahrzeugsitzen (13,14) des Fahrzeuges fixierbar ist, und die zwischen den mit den Bändern (3) und/oder Schlaufen versehenen Enden auf ihrer Innenseite mit einer weichen Babyunterlage (5) ausgestattet ist, wobei die Anordnung der Babyunterlage (5) auf der Matte (2) und die Abmessungen der Matte (2) sowie deren Bänder (3) und/oder Schlaufen derart gewählt sind, daß bei an den Kopfstützen (11,12) fixierter Matte (2) diese in demjenigen Bereich mit ihrer Außenseite auf einer Sitzfläche (16) des in Fahrtrichtung hinteren Sitzes (14) aufliegt, in dem auf der Innenseite der Matte (2) die Babyunterlage (5) angeordnet ist.

2. Wickelunterlage nach Anspruch 1,
**dadurch gekennzeichnet,**
**daß** die Abmessungen der Matte (2) derart gewählt sind, daß sich die Matte (2) einenends zumindest teilweise entlang der Vorderseite einer Rückenlehne (17) des hinteren Sitzes (14) und anderenends in Richtung auf die Rückseite einer Rückenlehne (18) und/oder auf die Kopfstütze (11) des vorderen Sitzes (13) erstreckt.

3. Wickelunterlage nach Anspruch 1 oder 2,
**dadurch gekennzeichnet,**
**daß** die Babyunterlage (5) abnehmbar an der Matte (2) angebracht ist.

4. Wickelunterlage nach einem der Ansprüche 1 bis 3,
**dadurch gekennzeichnet,**
**daß** auf der Matteninnenseite zwischen den mit den Bändern (3) und/oder Schlaufen versehenen Enden und der Babyunterlage (5) mehrere Taschen (8) zum Verstauen unterschiedlicher Utensilien angebracht sind.

5. Wickelunterlage nach einem der Ansprüche 1 bis 4,
**dadurch gekennzeichnet,**
**daß** auf der Matteninnenseite unter der Babyunterlage (5) Zusatztaschen (6) angeordnet sind, wobei die Babyunterlage (5) derart an der Matte (2) angebracht ist, daß sie zwischen einer ersten Stellung, in der sie auf den Zusatztaschen (6) aufliegt, und einer zweiten Stellung verstellbar ist, in der sie zum Zugänglichmachen der Zusatztaschen (6) nicht auf diesen aufliegt.

6. Wickelunterlage nach Anspruch 5,
**dadurch gekennzeichnet,**
**daß** die Zusatztaschen (6) zur Aufnahme von frischen Windeln (7) geeignet sind.

7. Wickelunterlage nach einem der Ansprüche 1 bis 6,
**dadurch gekennzeichnet,**
**daß** die Bänder (3) zum Fixieren der Matte (2) an den Kopfstützen (11,12) jeweils mit einem Klettverschluß (4) oder einer Clip- oder Rastschnalle versehen sind.

8. Wickelunterlage nach einem der Ansprüche 1 bis 6,
**dadurch gekennzeichnet,**
**daß** die Schlaufen geschlossen einteilig ausgebildet sind, wobei sie zum Fixieren der Matte (2) an den Kopfstützen (11, 12) einhängbar sind.

9. Wickelunterlage nach Anspruch 8,
**dadurch gekennzeichnet,**
**daß** die Schlaufen in Form eines dehnbaren Bandes ausgebildet sind.

10. Wickelunterlage nach einem der Ansprüche 1 bis 9,
**dadurch gekennzeichnet,**
**daß** auf der Mattenaußenseite wenigstens ein Band (21) vorgesehen ist, mit dem die Matte (2) in ihrem aufgerollten Zustand fixierbar ist.

11. Wickelunterlage nach Anspruch 10,
**dadurch gekennzeichnet,**
**daß** das Band einen Verschluß, insbesondere einen Klettverschluß oder eine Clip- oder Rastschnalle (22), aufweist.

## Claims

1. Baby's changing pad suitable for use in a car having at least two rows of seats, comprising a mat (2) made of a flexible material and capable of being rolled up, two opposite ends of which are provided with straps (3) and/or loops by means of which the mat (2) can be attached to two headrests (11, 12) of two seats (13, 14) arranged behind one another in the vehicle, and the inside of which between the ends carrying the straps (3) and/or loops is provided with a soft baby pad (5), the arrangement of the baby pad (5) and the dimensions of the mat (2) and its straps (3) and/or loops being so chosen that the outside of the mat (2), when attached to the headrests (11, 12), lies on a seat cushion (16) of the seat (14) representing the rear seat in the direction of travel with that area where the baby pad (5) is arranged on the inside of the mat (2).

2. Baby's changing pad according to claim 1,
**characterised in that**
the dimensions of the mat (2) are so chosen that one end of the mat (2) extends at least partially along the front of a backrest (17) of the rear seat (14), while the other end extends towards the rear of a backrest (18) and/or towards the headrest (11) of the front seat (13).

3. Baby's changing pad according to claim 1 or 2,
**characterised in that**
the baby pad (5) is detachably fitted to the mat (2).

4. Baby's changing pad according to any of claims 1 to 3,
**characterised in that**
several pockets (8) for stowing various accessories are provided on the inside of the mat between the ends fitted with straps (3) and/or loops and the baby pad (5).

5. Baby's changing pad according to any of claims 1 to 4,
**characterised in that**
additional pockets (6) are provided on the inside of the mat under the baby pad (5), the baby pad (5) being so attached to the mat (2) that it can be adjusted between a first position, in which it lies on the additional pockets (6), and a second position, in which it does not lie on the additional pockets (6) in order to provide access thereto.

6. Baby's changing pad according to claim 5,
**characterised in that**
the additional pockets (6) are suitable for holding fresh nappies (7).

7. Baby's changing pad according to any of claims 1 to 6,
**characterised in that**
each of the straps (3) is provided with a Velcro fastener (4) or a clip-on or locking buckle for attaching the mat (2) to the headrests (11, 12).

8. Baby's changing pad according to any of claims 1 to 6,
**characterised in that**
the loops are designed closed and in one piece and capable of being looped around the headrests (11, 12) to attach the mat (2).

9. Baby's changing pad according to claim 8,
**characterised in that**
the loops are designed in the shape of an elastic strap.

10. Baby's changing pad according to any of claims 1 to 9,
**characterised in that**
at least one strap (21) is provided on the outside of the mat for securing the mat (2) in its rolled-up position.

11. Baby's changing pad according to claim 10,
**characterised in that**
the strap is provided with fastening means, in particular with a Velcro fastener or a clip-on and locking buckle (22)

## Revendications

1. Support pour langer des bébés approprié à l'utilisation dans une voiture automobile présentant au moins deux rangées de sièges, comprenant une natte enroulable (2) en un matériau élastique qui, à deux extrémités opposées, présente des bandes (3) et/ou des boucles avec lesquelles la natte (2) peut être fixée sur deux appuis-tête (11, 12) de deux sièges de voiture (13, 14) disposés l'un derrière l'autre dans le sens de déplacement et qui, entre les extrémités munies de bandes (3) et/ou de boucles, est pourvue sur sa surface intérieure d'un support souple pour bébé (5), la disposition du support pour bébé (5) sur la natte (2) et les dimensions de la natte (2) ainsi que des bandes (3) et/ou boucles de celle-ci étant choisies de telle sorte, que lorsque la natte (2) est fixée à deux appuis-tête (11, 12), celle-ci s'appuie par sa surface extérieure sur une assise (16) du siège arrière (14) dans le sens de déplacement, dans la zone dans laquelle le support pour bébé (5) est disposé sur la surface intérieure de la natte (2).

2. Support pour langer des bébés selon la revendication 1, **caractérisé en ce que** les dimensions de la natte (2) sont choisies de telle sorte que la natte (2) s'étende à une extrémité d'un côté, du moins partiellement, le long de la surface avant d'un dossier (17) du siège arrière (14) et à l'autre extrémité sur la surface arrière d'un dossier (18) et/ou sur l'appui-tête (11) du siège avant (13).

3. Support pour langer des bébés selon la revendication 1 ou 2, **caractérisé en ce que** le support pour bébé (5) est installé de façon amovible sur la natte (2).

4. Support pour langer des bébés selon l'une des revendications 1 à 3, **caractérisé en ce que** sur la surface intérieure de la natte, entre les extrémités pourvues des bandes (3) et/ou des boucles et le support pour bébé (5), plusieurs poches (8) sont installées pour ranger des ustensiles divers.

5. Support pour langer des bébés selon l'une des revendications 1 à 4, **caractérisé en ce que** sur la surface intérieure de la natte, sous le support pour bébé (5), des poches supplémentaires (6) sont disposées, le support pour bébé (5) étant installé sur la natte (2) de telle sorte qu'il est réglable entre une première position, dans laquelle il repose sur les poches supplémentaires (6), et une deuxième position, dans laquelle il ne repose pas sur les poches supplémentaires (6) pour les rendre accessibles.

6. Support pour langer des bébés selon la revendication 5, **caractérisé en ce que** les poches supplémentaires (6) sont appropriées pour recevoir des couches propres (7).

7. Support pour langer des bébés selon l'une des revendications 1 à 6, **caractérisé en ce que** les bandes (3) pour la fixation de la natte (2) aux appuis-tête (11, 12) sont respectivement pourvues d'une fermeture agrippante (4) ou d'une boucle à agrafage ou encliquetage.

8. Support pour langer des bébés selon l'une des revendications 1 à 6, **caractérisé en ce que** les boucles sont configurées fermées d'une seule pièce et peuvent être accrochées aux appuis-tête (11, 12) pour fixer la natte (2).

9. Support pour langer des bébés selon la revendication 8, **caractérisé en ce que** les boucles sont configurées sous la forme d'une bande extensible.

10. Support pour langer des bébés selon l'une des revendications 1 à 9, **caractérisé en ce que** sur la surface extérieure de la natte est prévue au moins une bande (21) avec laquelle la natte (12) peut être fixée dans son état enroulé.

11. Support pour langer des bébés selon la revendication 10, **caractérisé en ce que** la bande présente une fermeture, notamment une fermeture agrippante ou une boucle à agrafe ou encliquetage (22).
